# EUROPÄISCHE PATENTSCHRIFT

(11) **EP 3 071 827 B1**
(45) Veröffentlichungstag und Bekanntmachung des Hinweises auf die Patenterteilung: **28.03.2018**
(21) Anmeldenummer: 15763596.2
(22) Anmeldetag: 16.09.2015
(51) Int. Cl.: F02M 51/06, F02M 59/10, F16C 13/00, F02M 61/20

(54) **ROLLE FÜR EINEN ROLLENSTÖSSEL EINER KRAFTSTOFFHOCHDRUCKPUMPE, ROLLENSTÖSSEL, KRAFTSTOFFHOCHDRUCKPUMPE UND BRENNKRAFTMASCHINE**
ROLLER FOR A ROLLER PLUNGER OF A HIGH PRESSURE FUEL PUMP, ROLLER PLUNGER, HIGH PRESSURE FUEL PUMP, AND INTERNAL COMBUSTION ENGINE
GALET POUR POUSSOIR À GALET DE POMPE À CARBURANT À HAUTE PRESSION, POUSSOIR À GALET, POMPE À CARBURANT À HAUTE PRESSION ET MOTEUR À COMBUSTION INTERNE

(30) Priorität: 08.10.2014 DE 102014220374; 19.11.2014 DE 102014223597
(43) Veröffentlichungstag der Anmeldung: 28.09.2016
(73) Patentinhaber: Continental Automotive GmbH, 30165 Hannover (DE)
(72) Erfinder: EDERER, Andreas, 93194 Walderbach (DE)
(86) Internationale Anmeldenummer: PCT/EP2015/071186
(87) Internationale Veröffentlichungsnummer: WO 2016/055247

(56) Entgegenhaltungen:
- EP-A1- 0 590 362
- EP-A2- 0 823 551
- DE-A1- 4 411 626
- DE-A1-102010 038 553
- DE-A1-102010 063 328
- GB-A- 896 030
- JP-A- 2012 189 748
- JP-U- S53 111 119

## Beschreibung

Die Erfindung betrifft eine Rolle für einen Rollenstößel einer Kraftstoffhochdruckpumpe, einen mit einer solchen Rolle ausgestatteten Rollenstößel, eine Kraftstoffhochdruckpumpe, die besagten Rollenstößel aufweist, sowie eine Brennkraftmaschine mit einer Kurbelwelle, die die Kraftstoffhochdruckpumpe umfasst.

Kraftstoffhochdruckpumpen, die einen Kraftstoff, der einem Brennraum einer Brennkraftmaschine zugeführt werden soll, mit hohem Druck beaufschlagen, sind zumeist als Kolbenpumpen aufgebaut, wobei ein Pumpenkolben den in einem Druckraum befindlichen Kraftstoff durch eine translatorische Hin- und Herbewegung komprimiert und somit in dem Kraftstoff einen hohen Druck erzeugt. Beispielsweise wird bei Kraftstoffhochdruckpumpen für Benzin-Brennkraftmaschinen der Kraftstoff mit einem Druck von 200 bar - 250 bar beaufschlagt, während der Kraftstoff von Hochdruckpumpen für Diesel-Brennkraftmaschinen mit einem Druck von 2000 bar - 2500 bar beaufschlagt wird.

Zum Antreiben des Pumpenkolbens in seiner translatorischen Bewegung wird eine Welle verwendet, wobei der Pumpenkolben häufig über einen Stößel, beispielsweise einen Rollenstößel, mit der Oberfläche der Welle in Kontakt steht.

Um insbesondere die hohen Drücke von 2000 bar - 3000 bar bereitstellen zu können, wird als Antriebswelle immer öfter eine Antriebswelle der Brennkraftmaschine wie beispielsweise die Kurbelwelle in Betracht gezogen. Um an der beispielhaft genannten Kurbelwelle einen ausreichend großen Abstand eines Nockens zum Antreiben des Pumpenkolbens zu den Pleuel einhalten zu können, weist die Kurbelwelle im Bereich des Nockens einen relativ großen Grundkreisdurchmesser auf. Auf diesem relativ großen Grundkreisdurchmesser rollt dann beim Antrieb des Pumpenkolbens die Rolle des zwischen Pumpenkolben und Kurbelwelle geschalteten Rollenstößel. Ist dabei die Rolle verhältnismäßig klein ausgestaltet und entspricht beispielsweise einer Rolle, die gewöhnlich bei Pumpen mit einer eigenen Nockenwelle als Antriebswelle verwendet werden, erhöht sich die Rotationsanzahl pro Zeiteinheit der Rolle um ein Vielfaches. Beispielsweise beträgt die Drehzahl der Rolle einer Nockenwelle gewöhnlich 5000 - 15 000 Umdrehungen pro Minute, bei der Anwendung an der Kurbelwelle können sich die Drehzahlen auf größer 40 000 Umdrehungen pro Minute erhöhen. Dies führt zu einem erhöhten Verschleiß und zu einer erhöhten Reibung innerhalb des Rollenstößels und insbesondere an der Rolle.

Um die Drehzahlen der Rolle zu reduzieren, besteht die Möglichkeit, den Rollendurchmesser zu vergrößern. Mit einer Vergrößerung des Rollendurchmessers ergibt sich durch das linear steigende Gewicht der Rolle eine große Rotationsenergie, was zu einem Anheben der Rolle und zusätzlichem Schlupf zwischen Rolle und Nocken der Kurbelwelle führt. Diese Effekte führen zu einer höheren Verschleißanfälligkeit innerhalb der Kraftstoffhochdruckpumpe.

EP 0 823 551 A2 beschreibt eine Rolle für einen Rollenstößel eines Kraftstoffeinspritzsystem, welche als Verbundrolle aufgebaut ist, wobei ein erstes Material zum Bilden eines ersten Verbundrollenbereichs leichter ist als ein zweites Material zum Bilden eines zweiten Verbundrollenbereichs.

DE 10 2010 038 553 A1 betrifft eine Stößelbaugruppe für eine Hochdruckpumpe eines Kraftstoffeinspritzsystems einer Brennkraftmaschine, die einen mit einem Pumpenarbeitsraum zusammenwirkenden Pumpenkolben aufweist, der unter Zwischenschaltung eines Rollenstößels von einer Nockenwelle betätigt wird, wobei der Rollenstößel einen Stößelkörper umfasst, in dem eine Laufrolle geführt ist. Erfindungsgemäß wird ein Reibverschleiß zwischen einer Laufrolle und dem mit der Laufrolle zusammenwirkenden Stößelkörper weiter verringert. Dies wird dadurch erreicht, dass die Laufrolle dort, wo sie im Stößelkörper geführt ist, vorzugsweise stirnseitig, einen verschleißfesten Einsatz aufweist.

Aufgabe der Erfindung ist es daher, eine Kraftstoffhochdruckpumpe bereitzustellen, die eine verringerte Verschleißanfälligkeit aufweist.

Diese Aufgabe wird durch Bereitstellen einer Rolle für einen Rollenstößel einer Kraftstoffhochdruckpumpe mit den Merkmalen des Anspruches 1 gelöst.

Ein Rollenstößel, der diese Rolle aufweist, eine Kraftstoffhochdruckpumpe mit dem Rollenstößel sowie eine Brennkraftmaschine, die die Kraftstoffhochdruckpumpe aufweist, sind Gegenstand der nebengeordneten Ansprüche.

Vorteilhafte Ausgestaltungen der Erfindung sind Gegenstand der abhängigen Ansprüche.

Eine Rolle für einen Rollenstößel einer Kraftstoffhochdruckpumpe, die als Verbundrolle aufgebaut ist, weist ein erstes Material zum Bilden eines ersten Verbundrollenbereichs und ein zweites Material zum Bilden eines zweiten Verbundrollenbereichs auf. Das erste Material und das zweite Material sind zum Bilden eines Verbundrollenvolumenelements miteinander verbunden, wobei das erste Material leichter ist als das zweite Material.

Durch den Aufbau einer Verbundrolle aus wenigstens zwei unterschiedlichen Materialien ist es möglich, in unterschiedlichen Bereichen der Rolle, die unterschiedlichen Anforderungen ausgesetzt ist, unterschiedliche Eigenschaften der Rolle zu erzeugen, die dann den entsprechenden Anforderungen gerecht werden. Gleichzeitig ist es möglich, wenn eines der Materialien leichter ist als das andere der Materialien, Gewicht an der Rolle einzusparen, wodurch Nachteile ausgeglichen werden, die mit einer schwereren Rolle einhergehen, wie beispielsweise das Anheben der Rolle und der zusätzliche Schlupf zwischen Rolle und Nocken durch die große Rotationsenergie einer schweren Rolle. Wenn nun eine große Rolle mit einem Gewicht ähnlich einer kleinen Rolle durch den Verbundaufbau erzeugt werden kann, kann eine solche große Rolle als Kontaktelement mit der Kurbelwelle verwendet werden, und es ergeben sich durch den größeren Rollendurchmesser kleinere Drehzahlen als bei der Verwendung einer kleinen Rolle. Dadurch wird der Verschleiß der Rolle und somit insgesamt des Rollenstößels verkleinert.

Mit diesem Verbundaufbau kann damit das Gesamtgewicht und die Rotationsenergie des Rollenstößels erheblich reduziert werden. Dadurch ist es möglich, einen Rollenstößel mit großer Rolle bei den Drehzahlen, wie sie beispielsweise in einem Pkw-Verbrennungsmotor vorliegen, zu betreiben. Durch diese Maßnahme kann der Verschleiß und die Reibung innerhalb des Rollenstößels deutlich reduziert werden.

Ein weiterer Vorteil besteht darin, dass eine Feder mit einer verringerten Kraft verwendet werden kann, die den Rollenstößel auf den Nocken drückt und somit ein Anheben verhindert.

Die Rolle ist drehbar um eine Drehachse ausgebildet, wobei der erste Verbundrollenbereich als eine sich in radialer Richtung von der Drehachse weg erstreckende erste Schicht ausgebildet ist, wobei der zweite Verbundrollenbereich als eine sich in radialer Schicht von der Drehachse weg erstreckende zweite Schicht ausgebildet ist, wobei die erste Schicht näher an der Drehachse angeordnet ist als die zweite Schicht.

Die Rolle als Verbundrolle wird somit durch schichtweisen Aufbau der unterschiedlichen Materialien erzeugt, was vorzugsweise besonders einfach herstellbar ist.

Die erste Schicht mit dem ersten Material ist näher an der Drehachse angeordnet als die zweite Schicht. Besonders vorteilhaft sind die erste Schicht und die zweite Schicht umlaufend um die Drehachse ausgebildet.

Das bedeutet, dass vorzugsweise die zweite Schicht die erste Schicht umgibt. Im Querschnitt durch die Rolle ergibt sich daher vorzugsweise ein erster Kreisring, gebildet aus dem ersten, leichteren Material, und ein den ersten Kreisring umgebender zweiter Kreisring, gebildet aus dem zweiten, schweren Material.

Somit kann vorteilhaft im Inneren der Rolle Gewicht eingespart werden.

Besonders vorteilhaft ist das zweite Material gegen eine Rollreibungskraft widerstandsfähiger als das erste Material.

Das zweite, schwere Material kann es daher besonders vorteilhaft als zweiter, äußerer Kreisring um das erste Material angeordnet werden. Die Verbundrolle ist daher vorzugsweise so aufgebaut, dass im Inneren ein leichtes Material angeordnet ist, das nur einer geringen Belastung, insbesondere einer geringen Reibbelastung, ausgesetzt ist, so dass hier eine große Auswahl an Materialien zur Verfügung steht. Vorteilhaft ist das schwerere Material, das widerstandsfähiger insbesondere gegen Rollreibungskräfte ist, im Außenbereich angeordnet und somit in dem Bereich, der im Betrieb tatsächlich einer Rollreibungskraft ausgesetzt ist.

Es kann somit vorzugsweise eine leichte und dennoch widerstandsfähige Rolle erzeugt werden.

Vorzugsweise ist das erste Material ein Kunststoff und/oder ein Aluminium und/oder eine Keramik. Dabei hat insbesondere Kunststoff den Vorteil, dass eine Vielzahl von Kunststoffen zur Verfügung steht, die gemäß ihrem Ausdehnungskoeffizienten ausgewählt werden können und an den Ausdehnungskoeffizienten des zweiten, schwereren Materials angepasst werden können.

Das zweite Material ist vorzugsweise ein Stahl, weil dieser kostengünstig erhältlich ist und außerdem den hohen Rollreibungskräften im Außenbereich der Rolle im Betrieb widerstehen kann.

Vorteilhaft ist die erste Schicht in radialer Richtung dicker ausgebildet als die zweite Schicht.

Beispielsweise weist die zweite Schicht in radialer Richtung eine Dicke von 0,5 mm - 3 mm, insbesondere 1 mm - 2 mm, auf.

Je dicker die erste Schicht mit dem leichteren Material ist, desto größer ist die Gewichtseinsparung, die erzielt werden kann. Die zweite Schicht, die in bevorzugter Ausgestaltung im Außenbereich der Rolle angeordnet ist, sollte vorteilhaft eine Dicke aufweisen, die eine gute Widerstandskraft gegen Rollreibungskräfte ermöglicht. Dies ist bevorzugt im Bereich von 0,5 mm - 3 mm, hier bevorzugt im Bereich 1 mm - 2 mm der Fall.

Vorzugsweise ist unmittelbar an der Drehachse ein Rollenkern mit einem Achsenelement zum Bilden der Drehachse und mit einem Lagerelement, insbesondere einem Gleitlagerelement, zum drehbaren Lagern des Verbundrollenvolumenelements auf dem Achsenelement angeordnet.

Durch Achsenelement und Lagerelement kann die Rolle vorteilhaft drehbar beispielsweise in einem Rollenstößel gelagert werden. Das Achsenelement bietet dabei eine ausreichende Stabilität im Bereich der Drehachse der Rolle an, und das Lagerelement dient dazu, das Verbundrollenvolumenelement drehbar um die Drehachse zu lagern.

Aufgrund der großen herrschenden Kräfte im Betrieb der Rolle, d. h. beim Kontakt mit der Kurbelwelle, ist es vorteilhaft, ein widerstandsfähiges Gleitlagerelement zu verwenden.

Beispielsweise ist das Lagerelement aus einer Stahlbuchse gebildet und weist daher eine große Widerstandskraft gegen Rollreibungskräfte im Kontakt mit dem Achsenelement auf.

Bevorzugt ist das Lagerelement mit dem Verbundrollenvolumenelement verbunden, so dass es sich gemeinsam mit dem Verbundrollenvolumenelement um das Achsenelement dreht. Dadurch können weitere Reibungskräfte zwischen Verbundrollenvolumenelement und Lagerelement vorteilhaft vermieden werden.

Das Verbundrollenvolumenelement weist einen dritten Verbundrollenbereich auf, der als eine sich in radialer Richtung von der Drehachse weg erstreckende, mit der ersten Schicht verbundene dritte Schicht ausgebildet ist. Diese dritte Schicht ist näher an der Drehachse angeordnet als die erste Schicht. Die dritte Schicht kann daher eine Stützschicht zum Stützen der ersten, leichteren und weniger widerstandsfähigeren Schicht bilden. Um als Stütze wirken zu können, ist es besonders bevorzugt, wenn die dritte Schicht einen Stahl aufweist bzw. vollständig aus Stahl gebildet ist.

Vorteilhaft weist die Rolle einen Gesamtdurchmesser von 35 mm - 55 mm, insbesondere 40 mm - 50 mm, auf.

Bei Verwendung einer Kurbelwelle als Antriebselement weist der Bereich um den Nocken einen Durchmesser von meist um 160 mm auf. Damit die Rolle mit möglichst geringen Drehzahlen auf diesem Bereich der Kurbelwelle laufen kann, ist es vorteilhaft, wenn sie einen relativ großen Durchmesser im Bereich von 35 mm - 55 mm aufweist. Gewöhnliche Rollen in Rollenstößeln, die auf für gewöhnlich verwendeten Nockenwellen mit einem Durchmesser von etwa 70 mm laufen, haben für gewöhnlich einen Durchmesser von nur etwa 20 mm.

Ein Rollenstößel für eine Kraftstoffhochdruckpumpe weist ein Rollenstößelgehäuse auf, in dem eine oben beschriebene Rolle drehbar gelagert ist und hat somit die gleichen Vorteile, die bereits in Bezug auf die Rolle beschrieben worden sind.

Eine Kraftstoffhochdruckpumpe ist insbesondere als Steckpumpe ausgebildet, d. h. weist kein eigenes Gehäuse auf, sondern der Motorblock einer Brennkraftmaschine wird als Gehäuse verwendet. Vorzugsweise wird diese Kraftstoffhochdruckpumpe von einer Kurbelwelle einer Brennkraftmaschine angetrieben, indem ein Pumpenkolben über einen Rollenstößel, der in direktem Kontakt mit einer Kurbelwellenoberfläche steht, bewegt wird. Der Rollenstößel weist dabei die oben beschriebene Rolle auf.

Eine Brennkraftmaschine weist eine Kurbelwelle und eine Kraftstoffhochdruckpumpe auf, die einen Pumpenkolben und einen Rollenstößel mit der oben beschriebenen Rolle aufweist, wobei die Rolle in direktem Kontakt mit einer Kurbelwellenoberfläche und in Kontakt mit dem Pumpenkolben angeordnet ist, um eine Bewegung auf den Pumpenkolben zu übertragen.

Eine vorteilhafte Ausgestaltung der Erfindung wird nachfolgend anhand der beigefügten Zeichnungen näher erläutert. Darin zeigt:
- Fig. 1: eine Brennkraftmaschine mit einer Kurbelwelle;
- Fig. 2: die Kurbelwelle aus Fig. 1 in einer perspektivischen Ansicht mit daran befestigter Kraftstoffhochdruckpumpe;
- Fig. 3: eine Schnittansicht der Kurbelwelle mit Kraftstoffhochdruckpumpe aus Fig. 2, wobei die Kraftstoffhochdruckpumpe einen Rollenstößel mit einer Rolle in Wirkverbindung mit einem Pumpenkolben aufweist; und
- Fig. 4: eine Schnittansicht durch die Rolle aus Fig. 3.

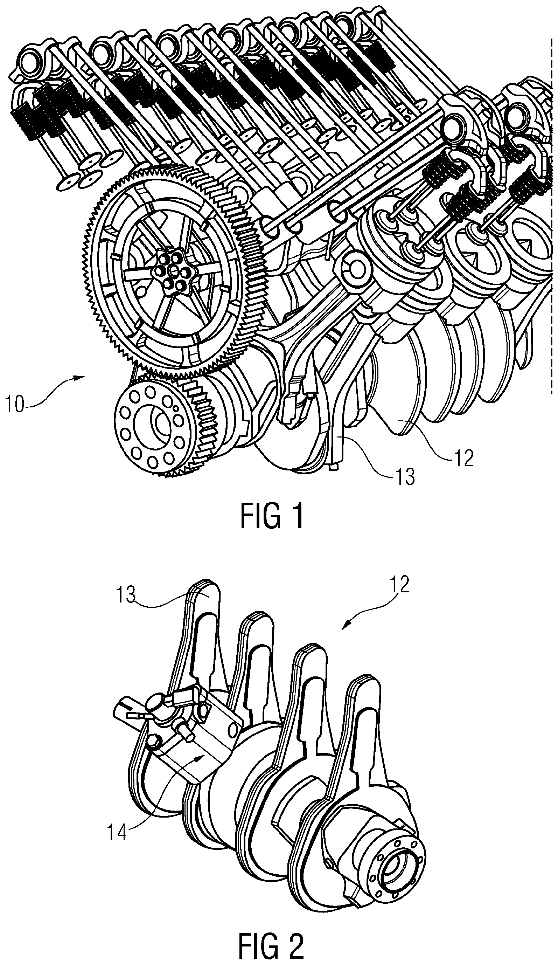

Fig. 1 zeigt eine perspektivische Darstellung eines Ausschnittes aus einer Brennkraftmaschine 10, die eine Kurbelwelle 12 aufweist.

Fig. 2 zeigt eine perspektivische Darstellung der in Fig. 1 gezeigten, mehrere Pleuel 13 aufweisenden Kurbelwelle 12, an der eine Kraftstoffhochdruckpumpe 14 angreift.

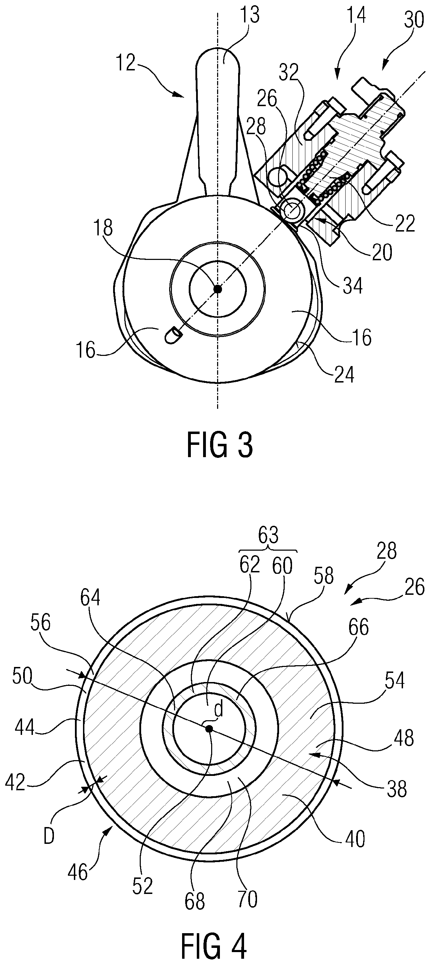

In Fig. 3 ist eine Schnittansicht auf die Kurbelwelle 12 mit der Kraftstoffhochdruckpumpe 14 aus Fig. 2 gezeigt.

Die Kurbelwelle 12 weist zwei Nocken 16 auf, die durch Drehung der Kurbelwelle 12 um ihre Kurbelwellendrehachse 18 periodisch mit einem Rollenstößel 20 der Kraftstoffhochdruckpumpe 14 in Kontakt kommen und dabei einen mit dem Rollenstößel 20 in Wirkkontakt stehenden Pumpenkolben 22 auf- und abbewegen.

In direktem Kontakt mit einer Kurbelwellenoberfläche 24 steht eine Rolle 26 des Rollenstößels 20, die, wie später im Zusammenhang mit Fig. 4 beschrieben wird, als Verbundrolle 28 ausgebildet ist.

Die Kraftstoffhochdruckpumpe 14 ist als Steckpumpe 30 gebildet und weist kein eigenes Gehäuse auf, sondern nutzt einen Motorblock 32 der Brennkraftmaschine 10 als Gehäuse.

Die Rolle 26 ist in einem Rollenstößelgehäuse 34 des Rollenstößels 20 drehbar gelagert.

Bei einer Drehung der Kurbelwelle 12 um ihre Kurbelwellendrehachse 18 rollt die Rolle 26 auf der Kurbelwellenoberfläche 24 ab. Sobald die Rolle 26 in Kontakt mit einem der Nocken 16 kommt, wird die Rolle 26 und damit der gesamte Rollenstößel 20 mit dem Pumpenkolben 22 in Richtung auf einen oberen Totpunkt gedrückt. Dadurch wird ein Volumen eines nicht gezeigten Druckraumes verkleinert, wobei in diesem Druckraum vorhandener Kraftstoff verdichtet und somit mit hohem Druck beaufschlagt wird.

Bei weiterer Bewegung der Kurbelwelle 12 um ihre Kurbelwellendrehachse 18 bewegt sich die Rolle 26 mit Rollenstößel 20 und Pumpenkolben 22 nach unten zu einem unteren Totpunkt, so dass ein Volumen des Druckraumes vergrößert wird und nicht mit Druck beaufschlagter Kraftstoff dort eingesaugt werden kann.

Es ist bekannt, Rollenstößel 20 zum Betreiben der Kraftstoffhochdruckpumpe 14 auf Nockenkonturen, beispielsweise auf einer Nockenwelle eines Motors, mit relativ kleinem Grundkreisdurchmesser laufen zu lassen. Aufgrund der Anforderungen, mit immer höherem Druck einzuspritzen, kommen jedoch die Antriebszahnriemen der Nockenwellen und die Nockenwellenversteller an ihre Belastungsgrenzen. Deshalb wird nun, wie in Fig. 3 dargestellt, die Kraftstoffhochdruckpumpe 14 direkt an der Kurbelwelle 12 betrieben. Dadurch wird jedoch ein relativ großer Grundkreisdurchmesser der Nocken 16 nötig, um den nötigen Abstand zu den Pleuel 13 an der Kurbelwelle 12 einhalten zu können. Bei der Verwendung von Standardrollenstößeln, wie sie im Zusammenhang mit Nockenwellen verwendet werden, würde die Rolle 26 auf der Kurbelwelle 12 um ein Vielfaches höher rotieren als bei einer Anwendung auf der Nockenwelle. Beispielsweise beträgt bei einer Anwendung auf einer Nockenwelle des Motors die Drehzahl der Rolle 26 typischerweise 5000 Umdrehungen pro Minute bis 15 000 Umdrehungen pro Minute. Bei der Anwendung der Kurbelwelle 12 jedoch sind die Drehzahlen im Bereich von 40 000 Umdrehungen pro Minute oder größer zu erwarten. Dies führt zu einem erhöhten Verschleiß und zu einer erhöhten Reibung innerhalb des Rollenstößels 20.

Um die Drehzahlen der Rolle 26 zu reduzieren, wird nun vorgeschlagen, den Rollendurchmesser zu vergrößern. Dies ist beispielsweise bei langsam laufenden Motoren wie beispielsweise Schiffsdieselmotoren bekannt. Durch das hohe Gewicht einer solchen großen Rolle 26 ergibt sich jedoch bei hohen Drehzahlen ein Anheben der Rolle 26 und einen Schlupf zwischen Rolle 26 und Nocken 16, da die Rolle 26 eine sehr große Rotationsenergie aufweist, und so der Dynamik bei hohen Drehzahlen nicht mehr folgen kann.

Daher wird nun vorgeschlagen, die Rolle 26 als Verbundrolle 28 aufzubauen, was in Fig. 4 im Querschnitt durch die Rolle 26 gezeigt ist.

Die Rolle weist einen ersten Verbundrollenbereich 38 auf, der aus einem ersten Material 40 gebildet ist, sowie einen zweiten Verbundrollenbereich 42, der aus einem zweiten Material 44 gebildet ist. Das erste Material 40 und das zweite Material 44 sind so miteinander verbunden, dass sie ein Verbundrollenvolumenelement 46 bilden, d. h. ein Element, das bei Bewegung der Rolle 26 agiert, als wäre es aus einem einzigen Material gebildet.

Das erste Material 40 ist dabei leichter als das zweite Material 44. Obwohl die Rolle 26 daher wie ein als einzelnes Element wirkendes Verbundrollenvolumenelement 46 gebildet ist, kann jedoch im Vergleich zu Standardrollen, die tatsächlich nur aus einem Material gebildet sind, eine deutliche Gewichtsersparung erzielt werden. Dadurch werden Kräfte, die auf die Rolle 26 und den Rollenstößel 20 wirken, verringert, da die Rotationsenergie, die direkt proportional zum Gewicht der Rolle 26 ist, verkleinert wird.

In der vorliegenden Ausführungsform sind die beiden Verbundrollenbereiche 38, 42 als Schichten 48, 50 ausgebildet, die sich von einer Drehachse 52 der Rolle 26 in radialer Richtung weg erstrecken. Dabei ist die erste Schicht 48 näher an der Drehachse 52 angeordnet als die zweite Schicht 50. Insbesondere sind beide Schichten 48, 50 umlaufend um die Drehachse 52 gebildet.

Daher ergibt sich in der Querschnittsansicht auf die Rolle 26 ein erster Kreisring 54, gebildet aus dem ersten Material 40, der von einem zweiten Kreisring 56, gebildet von dem zweiten Material 44, umgeben ist.

In einer dreidimensionalen Ausgestaltung kann die Rolle 26 beispielsweise als Kreiszylinder ausgebildet sein, der diese mehreren Schichten 48, 50 aufweist.

In der vorliegenden Ausführungsform ist das zweite Material 44 widerstandsfähiger gegen eine Rollreibungskraft als das erste Material 40.

Wie welches Material 40, 44 von der Drehachse 52 aus gesehen angeordnet ist, um das Verbundrollenvolumenelement 46 zu bilden, hängt auch von der Materialwahl ab.

Es ist auch vorstellbar, das erste Material 40 und somit die erste Schicht 48 außerhalb des zweiten Materials 44 anzuordnen, insbesondere dann, wenn das erste Material 40 statt das zweite Material 44 widerstandsfähiger gegen einer Rollreibungskraft ist.

Wo die Gewichtseinsparung der Rolle 26 realisiert wird, ist unerheblich. Es ist nur besonders vorteilhaft, wenn die Schicht 48, 50, die später in direktem Kontakt mit der Kurbelwellenoberfläche 24 steht, das Material 40, 44 aufweist, das die höhere Widerstandskraft gegen Rollreibungskräfte aufweist.

Weisen beide Materialien 40, 44 eine ähnliche Widerstandskraft gegen Rollreibungskräfte auf, ist es auch denkbar, diese an einer Rollenoberfläche 58 abwechselnd anzuordnen.

Beispielsweise kann das erste Material 40 ein Kunststoff oder Aluminium oder Keramik sein. Vorteilhaft ist das zweite Material 44 ein Stahl. Durch den Verbundaufbau der Rolle 26 des Rollenstößels 20 unter Verwendung von Kunststoff kann eine besonders gute Gewichtsersparung erzielt werden, außerdem kann ein Kunststoff ausgewählt werden, der einen ähnlichen Ausdehnungskoeffizienten aufweist wie Stahl, was insbesondere unter Betriebsbedingungen vorteilhaft ist.

Wird der Kunststoff als erstes Material 40, wie in Fig. 4 gezeigt, als innere erste Schicht 48 verwendet, kann zusätzlich im Betrieb eine Dämpfung der Stöße zwischen Nocken 16 und Kraftstoffhochdruckpumpe 14 erzielt werden. Auch dies kann zu einer erhöhten Robustheit und verlängerten Lebensdauer des Rollenstößels 20 und der Kraftstoffhochdruckpumpe 14 insgesamt führen.

Um eine besonders gute Gewichtseinsparung erzielen zu können, ist es vorteilhaft, wenn die Schicht 48, 50, die das leichtere, erste Material 40 aufweist, dicker ausgebildet ist als die Schicht 48, 50, die das zweite Material 44 und damit das schwerere Material aufweist.

In der in Fig. 4 gezeigten Ausführungsform ist die zweite Schicht 50, die den äußeren, zweiten Kreis 56 bildet und das schwerere, zweite Material 44 aufweist, vorzugsweise mit einer Dicke D von 0,5 mm - 3 mm ausgebildet. Mehr vorteilhaft weist sie eine Dicke D von 1 mm - 2 mm auf. Dadurch kann eine besonders gute Stabilität der Rolle 26 insgesamt unter Betriebsbedingungen erzielt werden.

Zum Lagern der Rolle 26 ist unmittelbar an der Drehachse 52 ein Achsenelement 60 und ein Lagerelement 62 angeordnet, die zusammen einen Rollenkern 63 bilden. Das Achsenelement 60 bildet dabei eine stabile Drehachse 52 für die Rolle 26. Das Lagerelement 62 ermöglicht es, dass sich das Verbundrollenvolumenelement 46 um das Achsenelement 60 drehen kann. Da besonders große Kräfte an der Rolle 26 wirken, ist es bevorzugt, wenn das Lagerelement 62 als Gleitlagerelement 64 ausgebildet ist und beispielsweise aus einer Stahlbuchse 66 gebildet ist.

Damit die Rolle 26 insgesamt noch stabiler wird, ist es vorteilhaft, wenn das Verbundrollenvolumenelement 46 eine dritte Schicht 68 aufweist, die sich in radialer Richtung von der Drehachse 52 weg erstreckt und näher an der Drehachse 52 angeordnet ist als die erste Schicht 48 und die zweite Schicht 50. Beispielsweise kann diese dritte Schicht 68 ebenfalls aus Stahl gebildet sein.

Die dritte Schicht 68 bildet somit einen dritten Verbundrollenbereich 70 des Verbundrollenvolumenelementes 46. Durch den mehrteiligen Aufbau der Rolle 26 kann eine deutliche Gewichtsreduktion der Rolle 26 erzielt werden, und es ist möglich, eine Rolle 26 zu bilden, die einen Gesamtdurchmesser d von 35 mm - 55 mm aufweist, ohne dass sich Kräfte im Betrieb der Rolle 26 ergeben, die zu einem Verschleiß der Kraftstoffhochdruckpumpe 14 führen könnten.

Die dritte Schicht 68 kann beispielsweise eine Dicke D von 1,5 mm - 3,5 mm, insbesondere 2 mm - 3 mm aufweisen.

### Bezugszeichenliste

- 10: Brennkraftmaschine
- 12: Kurbelwelle
- 13: Pleuel
- 14: Kraftstoffhochdruckpumpe
- 16: Nocken
- 18: Kurbelwellendrehachse
- 20: Rollenstößel
- 22: Pumpenkolben
- 24: Kurbelwellenoberfläche
- 26: Rolle
- 28: Verbundrolle
- 30: Steckpumpe
- 32: Motorblock
- 34: Rollenstößelgehäuse
- 38: erster Verbundrollenbereich
- 40: erstes Material
- 42: zweiter Verbundrollenbereich
- 44: zweites Material
- 46: Verbundrollenvolumenelement
- 48: erste Schicht
- 50: zweite Schicht
- 52: Drehachse
- 54: erster Kreisring
- 56: zweiter Kreisring
- 58: Rollenoberfläche
- 60: Achsenelement
- 62: Lagerelement
- 63: Rollenkern
- 64: Gleitlagerelement
- 66: Stahlbuchse
- 68: dritte Schicht
- 70: dritter Verbundrollenbereich
- D: Dicke
- d: Gesamtdurchmesser

## Patentansprüche

1. Rolle (26) für einen Rollenstößel (20) einer Kraftstoffhochdruckpumpe (14), welche als Verbundrolle (28) aufgebaut ist und aufweist:
- ein erstes Material (40) zum Bilden eines ersten Verbundrollenbereichs (38),
- ein zweites Material (44) zum Bilden eines zweiten Verbundrollenbereichs (42),
wobei das erste Material (40) und das zweite Material (44) zum Bilden eines Verbundrollenvolumenelements (46) miteinander verbunden sind,
wobei das erste Material (40) leichter ist als das zweite Material (44),
wobei die Rolle (26) drehbar um eine Drehachse (52) ausgebildet ist, wobei der erste Verbundrollenbereich (38) als eine sich in radialer Richtung von der Drehachse (52) weg erstreckende erste Schicht (48) ausgebildet ist, wobei der zweite Verbundrollenbereich (42) als eine sich in radialer Richtung von der Drehachse (52) weg erstreckende zweite Schicht (50) ausgebildet ist, wobei die erste Schicht (48) näher an der Drehachse (52) angeordnet ist als die zweite Schicht (50),
wobei das Verbundrollenvolumenelement (46) einen dritten Verbundrollenbereich (70) aufweist, der als eine sich in radialer Richtung von der Drehachse (52) weg erstreckende, mit der ersten Schicht (48) verbundene dritte Schicht (68) ausgebildet ist, die näher an der Drehachse (52) angeordnet ist als die erste Schicht (48).

2. Rolle (26) nach Anspruch 1,
**dadurch gekennzeichnet, dass** die erste Schicht (48) und die zweite Schicht (50) umlaufend um die Drehachse (52) ausgebildet sind.

3. Rolle (26) nach einem der Ansprüche 1 oder 2,
**dadurch gekennzeichnet, dass** das zweite Material (44) gegen eine Rollreibungskraft widerstandsfähiger ist als das erste Material (40).

4. Rolle (26) nach einem der Ansprüche 1 bis 3,
**dadurch gekennzeichnet, dass** das erste Material (40) ein Kunststoff und/oder Aluminium und/oder eine Keramik ist, wobei das zweite Material (44) ein Stahl ist.

5. Rolle (26) nach einem der Ansprüche 1 bis 4,
**dadurch gekennzeichnet, dass** die erste Schicht (48) in radialer Richtung dicker ausgebildet ist als die zweite Schicht (50), wobei die zweite Schicht (50) in radialer Richtung eine Dicke (D) von 0,5 mm bis 3 mm, insbesondere 1 mm bis 2 mm, aufweist.

6. Rolle (26) nach einem der Ansprüche 1 bis 5,
**dadurch gekennzeichnet, dass** unmittelbar an der Drehachse (52) ein Rollenkern (63) mit einem Achsenelement (60) zum Bilden der Drehachse (52) und mit einem Lagerelement (62), insbesondere einem Gleitlagerelement (64), zum drehbaren Lagern des Verbundrollenvolumenelements (46) auf dem Achsenelement (60) angeordnet ist, wobei das Lagerelement (62) insbesondere aus einer Stahlbuchse (66) gebildet ist und mehr insbesondere derart mit dem Verbundrollenvolumenelement (46) verbunden ist, dass es gemeinsam mit dem Verbundrollenvolumenelement (46) um das Achsenelement (60) drehbar ist.

7. Rolle (26) nach einem der Ansprüche 1 bis 6,
**dadurch gekennzeichnet, dass** die dritte Schicht (68) einen Stahl aufweist.

8. Rolle (26) nach einem der Ansprüche 1 bis 7,
**dadurch gekennzeichnet, dass** ein Gesamtdurchmesser (d) der Rolle (26) 35 mm bis 55 mm, insbesondere 40 mm bis 50 mm, beträgt.

9. Rollenstößel (20) für eine Kraftstoffhochdruckpumpe (14), aufweisend ein Rollenstößelgehäuse (34), in dem eine Rolle (26) nach einem der Ansprüche 1 bis 8 drehbar gelagert ist.

10. Kraftstoffhochdruckpumpe (14), insbesondere Steckpumpe (30), aufweisend einen von einer Kurbelwelle (12) einer Brennkraftmaschine (10) anzutreibenden Pumpenkolben (22), wobei zum direkten Kontaktieren einer Kurbelwellenoberfläche (24) ein Rollenstößel (20) mit einer Rolle (26) nach einem der Ansprüche 1 bis 8 in Wirkverbindung mit dem Pumpenkolben (22) vorgesehen ist.

11. Brennkraftmaschine (10) mit einer Kurbelwelle (12) und mit einer Kraftstoffhochdruckpumpe (14) nach Anspruch 10, die einen Pumpenkolben (22) und einen Rollenstößel (20) mit einer Rolle (26) aufweist, wobei die Rolle (26) in direktem Kontakt mit einer Kurbelwellenoberfläche (24) und in Wirkkontakt mit dem Pumpenkolben (22) angeordnet ist, um eine Bewegung der Kurbelwelle (12) auf den Pumpenkolben (22) zu übertragen.

## Claims

1. Roller (26) for a roller plunger (20) of a high pressure fuel pump (14), which roller (26) is constructed as a composite roller (28) and has:
- a first material (40) for forming a first composite roller region (38),
- a second material (44) for forming a second composite roller region (42),
the first material (40) and the second material (44) being connected to one another in order to form a composite roller volume element (46),
the first material (40) being lighter than the second material (44),
the roller (26) being configured such that it can be rotated about a rotational axis (52), the first composite roller region (38) being configured as a first layer (48) which extends in the radial direction away from the rotational axis (52), the second composite roller region (42) being configured as a second layer (50) which extends in the radial direction away from the rotational axis (52), the first layer (48) being arranged closer to the rotational axis (52) than the second layer (50),
the composite roller volume element (46) having a third composite roller region (70) which is configured as a third layer (68) which is connected to the first layer (48), extends in the radial direction away from the rotational axis (52), and is arranged closer to the rotational axis (52) than the first layer (48).

2. Roller (26) according to Claim 1, **characterized in that** the first layer (48) and the second layer (50) are of circumferential configuration about the rotational axis (52).

3. Roller (26) according to one of Claims 1 and 2, **characterized in that** the second material (44) is more resistant than the first material (40) to a rolling friction force.

4. Roller (26) according to one of Claims 1 to 3, **characterized in that** the first material (40) is a plastic and/or aluminum and/or a ceramic, the second material (44) being a steel.

5. Roller (26) according to one of Claims 1 to 4, **characterized in that** the first layer (48) is of thicker configuration in the radial direction than the second layer (50), the second layer (50) having a thickness (D) in the radial direction of from 0.5 mm to 3 mm, in particular from 1 mm to 2 mm.

6. Roller (26) according to one of Claims 1 to 5, **characterized in that** a roller core (63) is arranged immediately on the rotational axis (52) with an axle element (60) for forming the rotational axis (52) and with a bearing element (62), in particular a plain bearing element (64), for rotatably mounting the composite roller volume element (46) on the axle element (60), the bearing element (62) being formed, in particular, from a steel bush (66) and being connected, more particularly, to the composite roller volume element (46) in such a way that it can be rotated about the axle element (60) jointly with the composite roller volume element (46).

7. Roller (26) according to one of Claims 1 to 6, **characterized in that** the third layer (68) comprises a steel.

8. Roller (26) according to one of Claims 1 to 7, **characterized in that** an overall diameter (d) of the roller (26) is from 35 mm to 55 mm, in particular from 40 mm to 50 mm.

9. Roller plunger (20) for a high pressure fuel pump (14), having a roller plunger housing (34), in which a roller (26) according to one of Claims 1 to 8 is mounted rotatably.

10. High pressure fuel pump (14), in particular plug-in pump (30), having a pump piston (22) which is to be driven by a crankshaft (12) of an internal combustion engine (10), a roller plunger (20) with a roller (26) according to one of Claims 1 to 8 being provided in operative connection with the pump piston (22) in order to make direct contact with a crankshaft surface (24).

11. Internal combustion engine (10) having a crankshaft (12) and having a high pressure fuel pump (14) according to Claim 10 which has a pump piston (22) and a roller plunger (20) with a roller (26), the roller (26) being arranged in direct contact with a crankshaft surface (24) and in operative contact with the pump piston (22), in order to transmit a movement of the crankshaft (12) to the pump piston (22).

## Revendications

1. Galet (26) pour un poussoir à galet (20) d'une pompe à carburant haute pression (14), qui est construit sous forme de galet composite (28) et qui présente :
- un premier matériau (40) pour former une première région du galet composite (38),
- un deuxième matériau (44) pour former une deuxième région du galet composite (42),
le premier matériau (40) et le deuxième matériau (44) étant connectés l'un à l'autre pour former un élément volumique de galet composite (46),
le premier matériau (40) étant plus léger que le deuxième matériau (44),
le galet (26) étant réalisé de manière à pouvoir tourner autour d'un axe de rotation (52), la première région de galet composite (38) étant réalisée sous forme d'une première couche (48) s'étendant dans la direction radiale à l'écart de l'axe de rotation (52), la deuxième région de galet composite (42) étant réalisée sous forme de deuxième couche (50) s'étendant dans la direction radiale à l'écart de l'axe de rotation (52), la première couche (48) étant disposée plus près de l'axe de rotation (52) que la deuxième couche (50),
l'élément volumique de galet composite (46) présentant une troisième région de galet composite (70) qui est réalisée sous forme de troisième couche (68) connectée à la première couche (48), s'étendant dans la direction radiale à l'écart de l'axe de rotation (52), qui est disposée plus près de l'axe de rotation (52) que la première couche (48).

2. Galet (26) selon la revendication 1, **caractérisé en ce que** la première couche (48) et la deuxième couche (50) sont réalisées sous forme périphérique autour de l'axe de rotation (52).

3. Galet (26) selon l'une quelconque des revendications 1 ou 2, **caractérisé en ce que** le deuxième matériau (44) est plus résistant que le premier matériau (40) à une force de frottement de roulement.

4. Galet (26) selon l'une quelconque des revendications 1 à 3, **caractérisé en ce que** le premier matériau (40) est un plastique et/ou de l'aluminium et/ou une céramique, le deuxième matériau (44) étant un acier.

5. Galet (26) selon l'une quelconque des revendications 1 à 4, **caractérisé en ce que** la première couche (48) est réalisée dans la direction radiale sous forme plus épaisse que la deuxième couche (50), la deuxième couche (50) présentant dans la direction radiale une épaisseur (D) de 0,5 mm à 3 mm, en particulier de 1 mm à 2 mm.

6. Galet (26) selon l'une quelconque des revendications 1 à 5, **caractérisé en ce qu'**un noyau de galet (63) avec un élément d'axe (60) pour former l'axe de rotation (52) et avec un élément de palier (62), en particulier un élément de palier lisse (64) pour le support rotatif de l'élément volumique de galet composite (46) sur l'élément d'axe (60), est disposé directement sur l'axe de rotation (52), l'élément de palier (62) étant formé notamment d'une douille en acier (66) et étant plus spécifiquement connecté à l'élément volumique de galet composite (46) de telle sorte qu'il puisse tourner conjointement avec l'élément volumique de galet composite (46) autour de l'élément d'axe (60).

7. Galet (26) selon l'une quelconque des revendications 1 à 6, **caractérisé en ce que** la troisième couche (68) présente un acier.

8. Galet (26) selon l'une quelconque des revendications 1 à 7, **caractérisé en ce que** le diamètre total (d) du galet (26) mesure 35 mm à 55 mm, en particulier 40 mm à 50 mm.

9. Poussoir à galet (20) pour une pompe à carburant haute pression (14), présentant un boîtier de poussoir à galet (34) dans lequel est supporté à rotation un galet (26) selon l'une quelconque des revendications 1 à 8.

10. Pompe à carburant haute pression (14), en particulier pompe enfichable (30), présentant un piston de pompe (22) devant être entraîné par un vilebrequin (12) d'un moteur à combustion interne (10), un poussoir à galet (20) avec un galet (26) selon l'une quelconque des revendications 1 à 8 étant prévu en liaison fonctionnelle avec le piston de pompe (22) pour le contact direct avec une surface de vilebrequin (24).

11. Moteur à combustion interne (10) comprenant un vilebrequin (12) et une pompe à carburant haute pression (14) selon la revendication 10, qui présente un piston de pompe (22) et un poussoir à galet (20) avec un galet (26), le galet (26) étant disposé en contact direct avec une surface de vilebrequin (24) et en contact fonctionnel avec le piston de pompe (22), afin de transférer un mouvement du vilebrequin (12) au piston de pompe (22).
